Europäisches Patentamt

European Patent Office

Office européen des brevets

(19)

(11) Numéro de publication : **0 223 779**
**B1**

(12)

# FASCICULE DE BREVET EUROPÉEN

(45) Date de publication du fascicule du brevet :
09.08.89

(51) Int. Cl.⁴ : **B 25 J 15/00, B 25 J 19/02**

(21) Numéro de dépôt : 86902842.3

(22) Date de dépôt : 05.05.86

(86) Numéro de dépôt international :
PCT/FR 86/00154

(87) Numéro de publication internationale :
WO/8606999 (04.12.86 Gazette 86/26)

(54) PREHENSEUR TACTILE PNEUMATIQUE.

(30) Priorité : 30.05.85 FR 8508694

(43) Date de publication de la demande :
03.06.87 Bulletin 87/23

(45) Mention de la délivrance du brevet :
09.08.89 Bulletin 89/32

(84) Etats contractants désignés :
AT BE CH DE FR GB IT LI LU NL SE

(56) Documents cités :
WO–A–83/032 17
FR–A– 2 306 798
US–A– 4 533 167
Mesures - Régulation - Automatisme, volume 47,
No.3, Mars 1982, Paris/FR "Pinces pour robots :
L'intelligence dans le poignet", pages 29-35
IBM Technical Disclosure Bulletin, volume 27, No 1B,
Juin 1984, New York/US, E. GLASSSMAN et
al."Compliant gripper", pages 772-773

(73) Titulaire : **CENTRE NATIONAL DE LA RECHERCHE SCIENTIFIQUE (CNRS)**
**15, Quai Anatole France**
**F-75700 Paris Cedex 07 (FR)**

(72) Inventeur : **CAEN, Robert**
**14, rue du Canal Saint-Martory Frouzins**
**F-31270 Cugnaux (FR)**
Inventeur : **FONADE, Christian**
**2, rond-point Marcel Doret**
**F-31520 Ramonville Saint Agne (FR)**

(74) Mandataire : **Barre, Philippe**
**Cabinet Barre-Gatti-Laforgue 95 rue des Amidonniers**
**F-31069 Toulouse Cédex (FR)**

Jouve, 18, rue St-Denis, 75001 Paris, France

## Description

L'invention, faite à l'Institut de Mécanique des Fluides de l'Institut National Polytechnique de Toulouse, laboratoire associé au C.N.R.S. 040005, concerne un préhenseur pneumatique comprenant au moins un doigt mobile doté de sens tactile et dont la force de serrage est asservie au poids de l'objet manipulé. Elle s'applique en particulier à une pince multidigitale destinée à être assujettie sur l'extrémité du bras d'un manipulateur ou d'un robot industriel et capable de saisir et de transporter des objets de forme quelconque et de poids très variable.

Le développement rapide de la robotique et l'importance prise par les robots dans un grand nombre d'industrie en vue de l'automatisation des différentes phases de production ont amené la création de nombreux dispositifs de préhension.

Un de ces dispositifs est en particulier décrit dans le BE-A-0 117 679. Ce brevet décrit une main de robot industriel utilisant un vérin double effet comme mécanisme d'entraînement des doigts de préhension. Ces doigts, constitués de plusieurs phallanges articulées les unes par rapports aux autres, sont agencés par l'intermédiaire d'articulations d'une part, sur le corps du vérin, et d'autre part, sur l'organe mobile de ce vérin. Le déplacement de l'organe mobile entraîne ainsi le déplacement des doigts suivant une direction perpendiculaire à l'axe longitudinal du vérin. L'inconvénient essentiel présenté par ces dispositifs réside dans l'absence de contrôle de la force de serrage qui, fonction de la seule pression du fluide d'alimentation du vérin, demeure constante; ainsi ce dispositif interdit la manipulation d'objets fragiles susceptibles d'être brisés. De plus, l'utilisation d'une telle main nécessite un positionnement initial parfait de l'objet à transporter sous peine que l'un des doigts bute avant les autres sur cet objet et le renverse.

Pour tenter de remédier à ces inconvénients, d'autres dispositifs tels que décrits dans le brevet européen EP-A-0 112 729 ont été conçus. Ce brevet concerne un manipulateur comprenant un dispositif de préhension dont la force de serrage est sélectionnée à partir des informations fournies par des moyens de détection adaptés pour vérifier si l'objet est soulevé ou non. Ces moyens de détection sont reliés à un réseau de régulation électrique adapté pour augmenter pas à pas la force de serrage, à partir d'une valeur minimum présélectionnée, jusqu'à permettre le soulèvement de l'objet. Ce dispositif permet donc d'appliquer aux doigts de préhension la force minimum nécessaire au levage de l'objet à manipuler. Cependant les informations transmises par les moyens de détection sont traitées par des organes de régulation nécessitant l'utilisation d'un robot doté d'une unité centrale relativement complexe capable de gérer ces informations et de les répercuter au niveau des doigts de préhension. De plus, le problème posé par la nécessité d'un positionnement initial parfait de l'objet à saisir n'est pas résolu dans ce dispositif. En effet, les commandes d'ouverture ou de fermeture asservissant l'ensemble de la main, aucun des doigts ne dispose d'une autonomie de fonctionnement.

D'autres dispositifs, tels que décrits dans la demande P.C.T. publiée sous le n° WO 82/01156, utilisent un vérin hydraulique comme mécanisme d'entraînement de la main. Ce vérin présente une configuration à multi-cylindres ou multi-étages, dont les différents cylindres ou étages sont ou ne sont pas alimentés en fonction d'informations sur le poids de l'objet à soulever transmises à l'unité centrale du robot. Ces informations permettent de commander la commutation de vannes solénoïdes disposées sur les différents réseaux d'alimentation des cylindres ou étages du vérin. Ces dispositifs, tout comme les précédents, nécessitent l'utilisation d'un robot doté d'une unité centrale complexe et exigent un positionnement initial exact des objets à saisir en raison de la non-autonomie des différents doigts de préhension.

Basé sur un principe similaire, un dispositif décrit dans la demande P.C.T. n° WO 82/01155 utilise également des vérins hydrauliques comme mécanismes d'entraînement de la main. L'ouverture et la fermeture des doigts de la pince sont commandées par des vannes solénoïdes disposées sur les réseaux d'alimentation des vérins actionnant ces doigts. Le pilotage de ces vannes solénoïdes est réalisé à partir d'instructions fournies par l'unité centrale du robot. Cette unité centrale pilote également une autre vanne solénoïde positionnée en amont des précédentes et adaptée pour alimenter les vérins, par l'intermédiaire de deux réseaux introduisant des pertes de charge différentes. L'ordre de commutation entre ces deux réseaux est donnée par l'unité centrale du robot sur la base d'informations sur le poids de l'objet à soulever fournies à cette unité centrale.

Comme les précédents, ce dispositif présente l'inconvénient, de requérir une unité de centralisation des commandes complexe, toutes les instructions, ouverture et fermeture de la pince, détection de l'objet à saisir, évaluation de la force de serrage, émanant de cette unité centrale. En outre, il ne résout pas non plus le problème de la non-autonomie des doigts de préhension.

La présente invention se propose de pallier les inconvénients des dispositifs connus et de fournir un préhenseur perfectionné apte à déterminer la proximité d'un objet, à saisir cet objet et à le transporter.

Un objectif de la présente invention est de fournir un dispositif de préhension multidigital dans lequel chaque doigt est totalement autonome.

Un autre objectif de l'invention est de fournir un dispositif capable de transporter un objet en appliquant à cet objet une force de serrage fonction des conditions de son transport.

Un autre objectif est de fournir un dispositif ne nécessitant pas un centrage exact de l'objet à saisir, dans l'axe du préhenseur.

Un autre objectif est de fournir un dispositif pneumatique dont les performances ne sont pas influencées par de faibles variations éventuelles des sources d'alimentation.

A cet effet, le dispositif de préhension multidigital destiné à la saisie et à la manipulation d'objets comprend au moins un doigt mobile actionné par un vérin pneumatique dont les deux chambres internes sont reliées au moyen de réseaux à au moins une source d'alimentation, ledit dispositif étant caractérisé en ce que chaque doigt mobile comprend :

une lame flexible solidarisée à l'organe mobile du vérin de façon qu'une portion libre de ladite lame puisse fléchir selon une direction perpendiculaire à son axe longitudinal,

un organe de butée assujetti sur la portion libre de la lame et posssédant une surface de contact destinée à venir en contact avec un objet à saisir,

des moyens de détection de la proximité de l'objet à saisir, et des moyens de répartition du débit de fluide alimentant chaque chambre du vérin, lesdits moyens de répartition étant asservis aux moyens de détection et étant adaptés pour :

commander une différence de pression relative entre les deux chambres du vérin permettant le déplacement de l'organe mobile du vérin en l'absence de contact entre l'organe de butée et l'objet à saisir,

commander un rééquilibrage approximatif des pressions relatives des deux chambres du vérin lors du contact entre l'organe de butée et l'objet à saisir,

au moins un potentiomètre pneumatique composé d'une capacité de fluide dotée d'une entrée d'alimentation reliée à une source de fluide, d'une buse pourvue d'une ouverture de fuite et d'une sortie de fluide reliée à une chambre du vérin, l'ouverture de fuite dudit potentiomètre étant agencée en regard de la portion libre de la lame flexible, de façon à obtenir à la sortie de ce potentiomètre une grandeur pneumatique fonction directe de la flexion de la lame.

La mise en œuvre du dispositif selon l'invention ne nécessite donc comme commandes externes émanant par exemple de l'unité centrale d'un robot, que l'ordre d'ouverture et de fermeture des doigts et l'ordre de levage de l'objet. Ces commandes consistent en ordres « tout ou rien » et sont par conséquent indépendantes du poids ou de la forme de l'objet à manipuler, d'où une simplification possible de l'unité centrale du robot.

L'ordre de fermeture des doigts ayant été transmis, chaque doigt mobile se déplace jusqu'à arriver au contact de l'objet à saisir. Les moyens de détection permettent alors, comme on le comprendra mieux plus loin, de commander l'arrêt du déploiement de chaque tige de vérin. Il est à noter que chaque doigt mobile possédant ses moyens de détection propres, il n'est pas nécessaire de centrer l'objet avec exactitude dans l'axe de la pince. Une fois l'objet situé entre les doigts, l'ordre de préhension peut être donné et le levage s'effectuer. Le dispositif est alors autonome et réagit en fonction du poids de l'objet et des accélérations éventuelles qui sont communiquées à celui-ci. Toutes ces données entraînent, en effet, une déformation plus ou moins importante de la lame flexible, déformation qui se traduit par une variation de la grandeur obtenue à la sortie du potentiomètre et donc par un déséquilibre croissant ou décroissant entre les pressions relatives des deux chambres du vérin. La force de serrage est ainsi fonction directe du poids de l'objet à saisir et des conditions de transport de cet objet.

Selon un mode de réalisation préférentiel :

les moyens de répartition sont constitués par un corps de vanne pneumatique intégré à l'intérieur de l'organe de butée et possédant au moins une entrée reliée à une source d'alimentation et au moins une sortie reliée à la chambre du vérin dont l'expansion provoque un déplacement de l'organe mobile en direction de l'objet à saisir,

les moyens de détection sont constitués par un obturateur de vanne, mobile entre deux positions extrêmes :

une position déployée où il se trouve en saillie par rapport à la face de contact de l'organe de butée et où il permet l'écoulement du fluide entre l'entrée et la sortie du corps de vanne,

une position rétractée où il est escamoté par rapport à ladite face de contact et où il empêche l'écoulement du fluide entre l'entrée et la sortie du corps de vanne.

La mise en œuvre du doigt de préhension ainsi obtenu peut être réalisée à partir d'un seul fluide d'alimentation. De plus, ces moyens de détection pneumatiques peuvent être raccordés facilement sur le réseau pneumatique d'alimentation du vérin. Ce raccordement, comme on le verra plus loin, présente l'avantage d'être réalisé sans nécessiter de dispositif dynamique annexe.

Selon une autre caractéristique de l'invention, chaque doigt mobile comprend deux potentiomètres dont les sorties respectives sont reliées chacune à une chambre différente du vérin, lesdits potentiomètres étant agencés de part et d'autre de la portion libre de la lame flexible de façon que leurs débits de fuite varient en sens inverse lors de la flexion de ladite lame.

En outre selon un mode de réalisation préférentiel, le réseau de fluide alimentant les entrées de ces potentiomètres est adapté pour introduire des pertes de charges de valeurs différentes aptes à entraîner un faible décalage entre les pressions relatives des chambres du vérin lorsque la lame est au repos.

La présence d'un potentiomètre de part et d'autre de la lame flexible permet de contrôler exactement les pressions relatives respectives de chaque chambre du cylindre et donc par conséquent la force de serrage du dispositif et ce malgré de faibles variations éventuelles de la pression de la source du fluide d'alimentation.

L'agencement de ces potentiomètres associé aux pertes de charges introduites par leurs réseaux d'alimentation respectifs permettent notamment d'exercer une force de serrage initiale définie avec exactitude sur l'objet à saisir, force qui permet au doigt mobile de détecter le glissement de l'objet lors du levage de celui-ci. En outre, l'utilisation de deux potentiomètres ·permet de doubler la sensibilité du dispositif.

De plus, selon une autre caractéristique de l'invention, afin d'obtenir une réaction rapide de la lame flexible au glissement de l'objet, tout en utilisant une lame de raideur suffisante pour assurer le serrage nécessaire au maintien de l'objet sans saturer les potentiomètres, chaque lame peut être pourvue avantageusement d'au moins un appui intermédiaire agencé de façon à modifier la loi de flexion de celle-ci.

Le dispositif tel que décrit ci-dessus peut être assujetti sur l'extrémité du bras d'un manipulateur ou d'un robot industriel doté d'une unité centrale de commande, afin de réaliser un préhenseur multidigital. Ce préhenseur comprend au moins un doigt mobile et au moins un doigt fixe, agencés de façon à permettre la préhension et le levage d'un objet, l'unité centrale du manipulateur ou du robot industriel étant relié au dispositif de préhension en vue de commander le déplacement des doigts.

L'invention ayant été exposée dans sa forme générale, d'autres caractéristiques, buts et avantages se dégageront de la description détaillée qui suit et de l'examen des dessins annexés qui en présentent à titre d'exemples non limitatifs une version simplifiée, un mode de réalisation préférentiel et une variante. Sur ces dessins qui font partie intégrante de la description :

les figures 1 et 2 sont des vues schématiques explicatives montrant la version simplifiée d'un doigt mobile conforme à l'invention pendant la phase d'approche de l'objet et pendant la phase de préhension de cet objet,

la figure 3 est une vue générale schématique en coupe partielle d'un mode de réalisation préférentiel d'un doigt mobile conforme à la présente invention,

les figures 4a et 4b sont des coupes schématiques, à échelle dilatée, montrant la position d'un organe de détection lors de la phase d'approche et lors de la phase de préhension de l'objet,

les figures 5a et 5b sont des coupes schématiques à échelle dilatée montrant une variante de réalisation de l'organe de détection lors de la phase d'approche et lors de la phase de préhension de l'objet,

la figure 6 est une vue en perspective d'un exemple de réalisation d'un préhenseur multidigital conforme à l'invention.

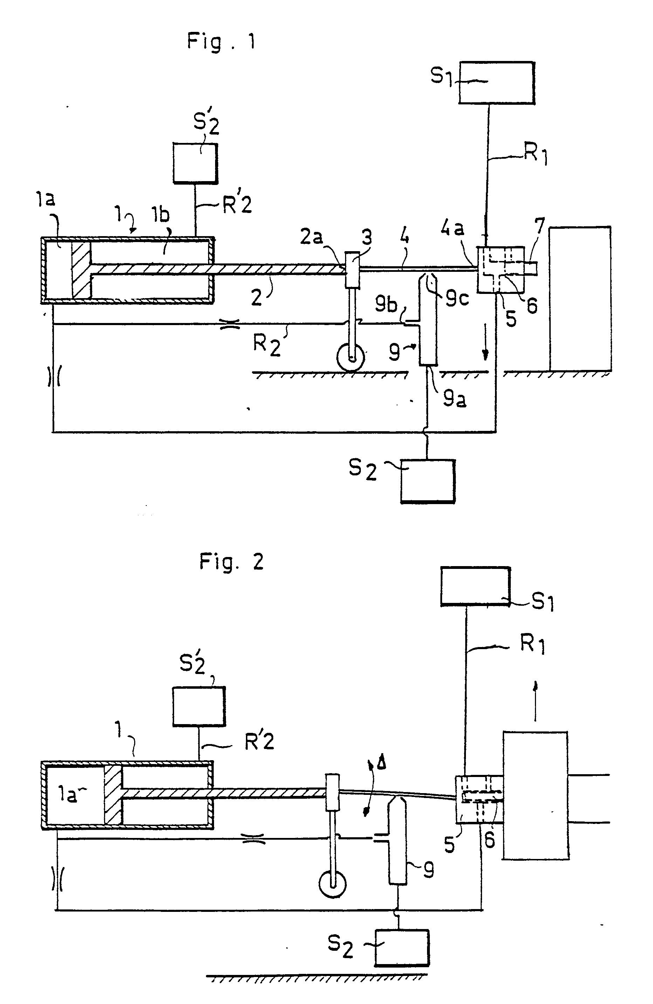

Le dispositif simplifié représenté à titre d'exemple aux figures 1 et 2 constitue l'un des doigts d'un préhenseur pneumatique multidigital destiné à être assujetti sur l'extrémité du bras d'un manipulateur ou d'un robot industriel. Chaque doigt est muni d'un détecteur de proximité de l'objet à saisir et également d'un détecteur d'effort vertical.

Chaque doigt mobile comprend un vérin 1 pneumatique dont les deux chambres (1a, 1b) internes sont raccordées directement à un réseau d'alimentation pneumatique. Ce vérin est conçu de façon à obtenir une réduction des frottements entre le piston et le corps dudit vérin, en vue de ne pas nuire à la sensibilité du dispositif de préhension. Ce but peut être atteint grâce à un usinage approprié de la paroi intérieure du corps de vérin et de la phériphérie du piston, usinage destiné à obtenir une réduction des efforts de frottement tout en minimisant le débit de fuite entre les chambres internes du vérin. Cet usinage peut, par exemple, consister à réaliser des cannelures sur la périphérie du piston.

Sur l'extrémité 2a de la tige 2 de ce vérin est assujetti un support 3. Sur ce support 3 est fixée l'extrémité d'une lame flexible 4, en un matériau rigide, dont l'autre extrémité 4a est libre de façon à pouvoir fléchir selon une direction (Δ) perpendiculaire à son axe longitudinal.

Sur cette extrémité libre 4a de la lame 4 flexible, est assujetti un organe de butée 5 destiné à venir en contact avec un objet à saisir. Cet organe de butée est agencé sur l'extrémité de la lame de façon à permettre un léger jeu relatif entre ces deux éléments, en vue d'éviter une mise en flexion éventuelle de la lame 4 lors du contact de l'objet à saisir. A l'intérieur de cet organe de butée est intégré le corps d'une vanne 6 pneumatique dotée d'une entrée d'alimentation 6a, et de deux sorties 6b et 6c ; lesdites entrées et lesdites sorties débouchent sur deux faces opposées de l'organe de butée situées dans des plans parallèles à l'axe longitudinal de la lame 4 flexible. Le corps de cette vanne 6 est agencé pour déboucher sur la face 5a dite de contact de l'organe de butée 5, opposée à la lame 4 flexible ; son obturateur 7 est adapté pour se déplacer perpendiculairement à ladite face 5a entre deux positions extrêmes : une position déployée où son extrémité 7a fait saillie par rapport à cette face 5a et une position rétractée où cette extrémité se trouve approximativement dans le même plan que celle-ci. En outre, la face de contact 5a de l'organe de butée 5 est revêtue d'un patin 8 en un matériau souple du type caoutchouc destiné à augmenter l'adhérence de cette face.

Chaque doigt comprend également un potentiomètre 9 pneumatique composé d'une capacité de fluide dotée classiquement d'une entrée d'alimentation 9a, d'une buse pourvue d'une ouverture de fuite 9c et d'une sortie 9b reliée à une chambre 1a ou 1b du vérin 1.

Ce potentiomètre 9 est agencé au voisinage d'une face de la lame 4, perpendiculaire à la direction de flexion de ladite lame de façon que le plan de l'ouverture de fuite 9c de la buse soit sensiblement parallèle à ladite face. Il est en outre positionné par rapport à la lame flexible de façon que son débit de fuite, diminue avec la déformation de cette lame ou augmente avec cette déformation, la sortie pneumatique étant raccordée à la chambre 1a du vérin contenant la tige du vérin ou respectivement à l'autre chambre 1b du vérin.

Ce doigt mobile est raccordé par l'intermédiaire de trois réseaux, R1, R2 et R'2, pneumatiques à trois sources d'alimentation S1, S2 et S'2, à pression constante respectivement P1, P2 et P'2.

Le premier réseau R1 relie d'une part, la source S1 à l'entrée d'alimentation 6a de l'organe de butée 5, et d'autre part, une des sorties d'utilisation 6c de cet organe à la chambre 1a du vérin. Le deuxième réseau R2 relie la deuxième source S2, à l'entrée d'alimentation 9a du potentiomètre 9, la sortie 9b de ce potentiomètre étant reliée à la chambre 1a du vérin. Le troisième réseau R'2 relie directement la source S'2 à la chambre 1b du vérin.

(Cette configuration correspond à une position du potentiomètre 9 amenant une diminution du débit de fuite proportionnelle à la déformation de la lame 4. On aurait pu de même prévoir la configuration inverse à celle-ci).

Ces différents réseaux R1, R2 et R'2 sont adaptés pour introduire des pertes de charge destinées à contrôler les débits de fluide et à affiner les différents réglages. Le réseau R1 est notamment adapté pour introduire des pertes de charge destinées à éviter un écoulement trop important du fluide de la source S2 vers l'organe de butée 5. Le réglage des pertes de charge de ce réseau R1 permet en outre de contrôler le débit et donc la vitesse de déploiement de la tige du vérin.

De plus, la pression P2 de la source d'alimentation S2 est réglable en fonction de la pression du fluide provenant de la source S'2 et alimentant la chambre 1b du vérin de façon à obtenir, lorsque la lame 4 n'est pas sollicitée en flexion, un léger décalage entre les pressions relatives respectives de ces chambres 1a et 1b.

Le fonctionnement d'un tel dispositif s'effectue en deux phases, une phase d'approche de l'objet à saisir et une phase de préhension et de levage de cet objet.

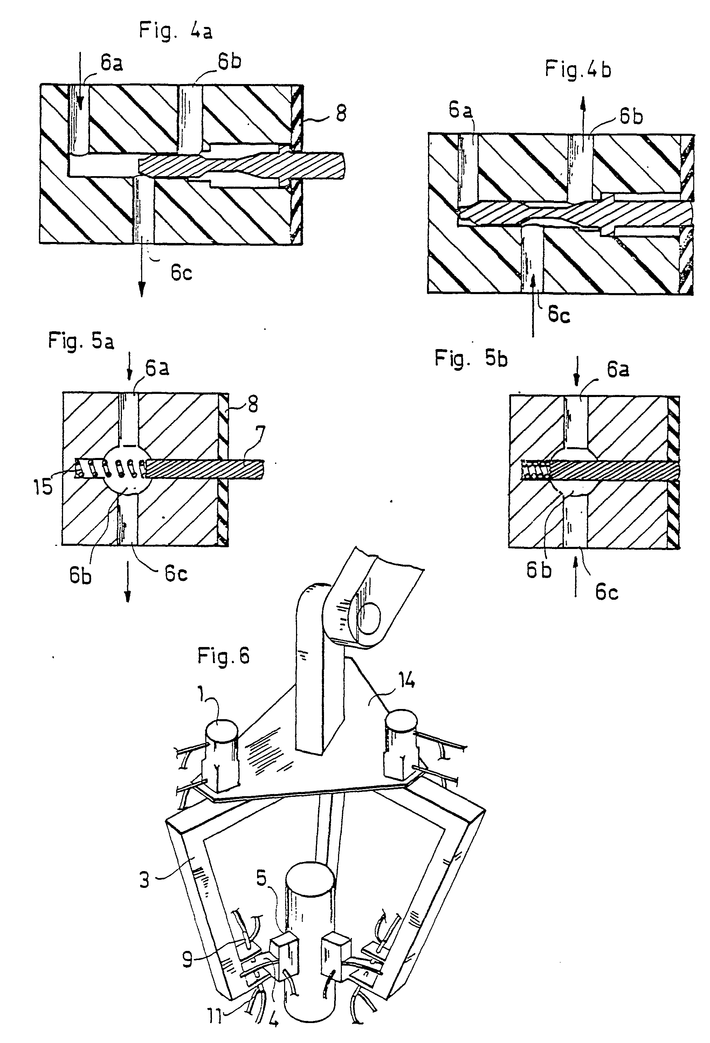

Durant la phase d'approche (figure 1), l'obturateur 7 de la vanne 6 pneumatique fait saillie par rapport à la face de contact 5a de l'organe de butée. Dans cette position, l'obturateur 7 autorise le libre écoulement du fluide entre l'entrée d'alimentation 6a et la sortie d'utilisation 6c de la vanne 6 (figure 4a). La source d'alimentation S1 est donc reliée à la chambre 1a du vérin 1 et la différence entre les pressions relatives des deux chambres 1a et 1b est donc augmentée de la pression du fluide provenant de la source S1, cette pression supplémentaire permettant une approche rapide de l'objet à saisir.

Lors du contact avec cet objet l'obturateur 7 joue le rôle de détecteur de proximité et commande la fermeture de la vanne 6. En effet, la pression imprimée à l'extrémité 7a de cet obturateur 7 par le contact de l'objet à saisir, entraîne le retrait de celui-ci à l'intérieur du corps de vanne 6. Dans cette position, l'obturateur ferme le canal d'écoulement reliant l'entrée 6a à la sortie 6c. Ce dispositif de détection permet donc une approche rapide de l'objet tout en évitant de bousculer celui-ci au moment du contact. En outre, afin de permettre l'évacuation du fluide contenu dans le tronçon du réseau R1 reliant le vérin 1 à l'organe de butée 5, l'obturateur est adapté pour permettre dans sa position de retrait le libre écoulement dudit fluide entre la sortie d'utilisation 6c et la sortie d'évacuation 6b débouchant à l'air libre (figure 4b).

A la fin de cette phase d'approche, la face 5a de contact de l'organe de butée 5 se trouve donc positionnée contre l'objet à saisir, exerçant sur celui-ci une force de serrage initiale de l'ordre de quelques dizaines de grammes due au décalage initial entre les pressions relatives des deux chambres du vérin.

Cette force de serrage initiale permet au début de la phase de préhension et de levage de détecter le glissement relatif entre l'objet et la face de contact 5a de l'organe de butée 5. La sensibilité du dispositif est accrue par l'utilisation d'un vérin 1 présentant un frottement minimum.

Ensuite, lors du levage de l'objet la déformation de la lame 4 flexible augmente en fonction des forces de frottement s'exerçant entre l'objet et l'organe de butée, et ce jusqu'à une position d'équilibre fonction du poids de l'objet. En effet, cette déformation entraîne une diminution (ou respectivement une augmentation suivant la configuration adoptée) du débit de fuite du potentiomètre 9 et par conséquent une augmentation de la pression relative de la chambre 1a du vérin. La force de serrage appliquée à l'objet, fonction du décalage entre les pressions relatives internes des chambre 1a et 1b du vérin, augmente donc jusqu'à l'obtention d'une force, apte à équilibrer le poids de cet objet. Pour un dispositif soigneusement dimensionné, cette force de serrage peut donc représenter la force strictement nécessaire à la manipulation de l'objet.

Les lames utilisées sont caractérisées par la déformation qu'elles subissent en fonction du poids soutenu. Généralement, ces lames sont adaptées pour se déformer d'une valeur correspondant à l'écartement classique entre lame et potentiomètre pour des poids soutenus atteignant quelques kilogrammes. Le poids minimum détecté est lui fonction de la force de serrage initiale et peut descendre jusqu'à quelques dizaines de grammes.

Il est à noter, en outre, qu'en phase d'approche, la commande de fermeture des doigts provoque automatiquement le déplacement de l'obturateur 7 de sa position de retrait vers sa position déployée. En effet, les forces pneumatiques émanant de la source S1 et s'exerçant sur l'extrémité de cet obturateur sont suffisantes pour entraîner le déplacement de celui-ci sans avoir recours à un ressort de rappel ou tout autre dispositif connu.

Toutefois, le dispositif peut être réalisé en utilisant comme organe de détection un système à interruption de jet intégré dans l'organe de butée (figures 5a, 5b — sur ces figures une numérotation identique aux figures 4a, 4b a été utilisée pour désigner des éléments dont les fonctions sont similaires aux éléments représentés à ces figures 4a, 4b). Le système est pourvu, comme l'organe de détection décrit ci-avant, d'une entrée d'alimentation 6a et d'une sortie d'utilisation 6c, la sortie d'évacuation étant remplacée par un évent 6b. Le déplacement de l'obturateur 7 de sa position de retrait (écoulement interrompu) à sa position déployée (écoulement libre) est autorisée par l'utilisation d'un ressort 15.

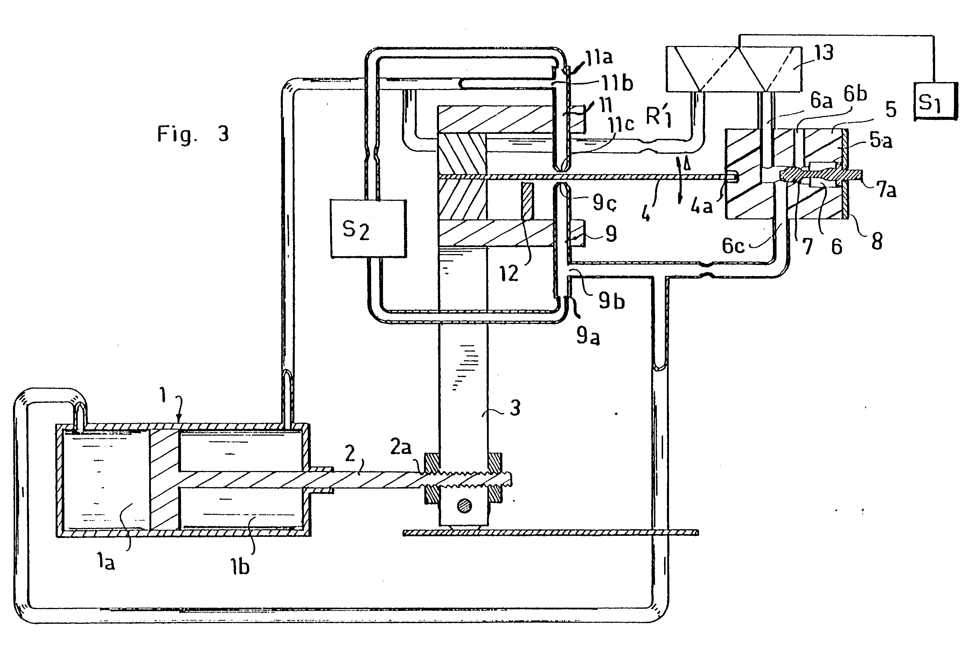

Par ailleurs, la figure 3 représente un mode de réalisation préférentiel qui comporte quelques adaptations par rapport au doigt mobile dont nous venons d'expliciter le principe de fonctionnement. Tout d'abord ce dispositif comprend deux potentiomètres 9 et 11 dont les entrées 11a et 9a respectives sont alimentées à partir de la même source S2. Les sorties 9b et 11b respectives de ces potentiomètres sont, elles, raccordées chacune à une chambre différente 1a ou 1b du vérin 1.

Ces potentiomètres 9 et 11 sont agencés de part et d'autre de la lame 4 flexible, les plans de leur ouverture de fuite étant sensiblement parallèles entre eux et perpendiculaires à la direction Δ de flexion de ladite lame 4. En outre, les pertes de charge des tronçons du réseau R2 reliant la source S2 aux entrées respectives de ces potentiomètres sont adaptées pour obtenir un faible décalage initial entre les pressions relatives des deux chambres 1a et 1b du vérin 1, dans le sens de l'augmentation de la force de serrage, lorsque la lame est au repos.

L'utilisation de deux potentiomètres 9 et 11 au lieu d'un seul, permet de pouvoir réguler avec exactitude les pressions relatives des chambres du vérin en fonction de la déformation de la lame 4, et ce malgré de faibles variations éventuelles de la pression de la source S2. L'utilisation de deux potentiomètres permet également de doubler la sensibilité du dispositif.

De plus, sur le support 3 est assujetti un appui 12 intermédiaire de la lame 4 flexible agencé de façon que la distance entre son extrémité se trouvant en regard de la lame 4 et cette lame, soit inférieure à la distance séparant cette lame de l'ouverture de fuite du potentiomètre 9 raccordé à la chambre 1a.

Ainsi, cet appui intermédiaire entraîne la modification de la loi de flexion de la lame en cours de préhension. Cette modification permet d'utiliser une lame 4 relativement souple de façon à obtenir un système sensible, apte à réagir rapidement au glissement de l'objet, tout en autorisant une augmentation du poids des objets transportés sans saturation des potentiomètres grâce à la « raideur » fournie à cette lame par l'appui 12.

Le dispositif, tel que représenté figure 3, utilise en outre un mécanisme pneumatique 13, commandant la fermeture ou l'ouverture de chaque doigt de préhension.

Ce mécanisme permet de relier la source S1, soit à la chambre 1a au moyen du réseau R1, tel que décrit ci-avant, afin d'entraîner la fermeture du doigt de préhension, soit à la chambre 1b au moyen d'un réseau R1′ afin d'entraîner l'ouverture du doigt.

Ces doigts mobiles peuvent être utilisés pour la réalisation d'un préhenseur pneumatique assujetti sur l'extrémité 14 d'un robot industriel (figure 6). Ce préhenseur est constitué, en l'exemple, d'au moins deux doigts mobiles et d'un troisième doigt qui peut être, soit fixe, soit mobile. Il est à noter que le nombre et la forme des doigts, tant mobiles que fixes, est variable selon le domaine d'application de ce préhenseur. Les doigts mobiles sont agencés sur l'extrémité du bras du robot de façon à converger vers un même point de concours situé approximativement dans l'axe de symétrie de la pince.

Les commandes d'ouverture et de fermeture du préhenseur peuvent par exemple être réalisées à partir d'une électrovalve « tout ou rien » commandée par l'unité centrale du robot qui transmet les informations émises par une micro-caméra destinée au contrôle de la position de l'objet.

Ainsi, le positionnement de la pince en regard de l'objet étant réalisé, l'unité centrale ordonne la fermeture des doigts par l'intermédiaire de l'électrovalve. A partir de cette position et de manière totalement indépendante, le préhenseur est alors adapté pour amener les doigts en contact avec l'objet avec une force de serrage très faible (de quelques dizaines de grammes). Il est à noter que lors de leur approche, les doigts sont indépendants les uns des autres, ce qui évite d'avoir à positionner l'objet exactement dans l'axe du préhenseur.

Le bras du robot peut alors soulever verticalement l'objet, de préférence avec une vitesse initiale faible, afin de permettre aux différents doigts de s'adapter au poids de l'objet en augmentant leur force de serrage jusqu'à ce que cette force contrebalance ce poids. Des déplacements plus rapides peuvent alors être autorisés jusqu'à l'endroit de destination de l'objet, la force de serrage appliquée étant fonction du poids et des conditions de transport de cet objet.

## Revendications

1. Dispositif de préhension multidigital destiné à la saisie et à la manipulation d'objets et comprenant au moins un doigt mobile (5) actionné par un vérin (1) pneumatique dont les deux chambres internes (1a, 1b) sont reliées au moyen de réseaux (R1, R2 et R'2) à au moins une source d'alimentation (S1, S2, S'2), ledit dispositif étant caractérisé en ce que chaque doigt mobile comprend :

une lame flexible (4) solidarisée à l'organe mobile (2) du vérin (1) de façon qu'une portion libre de ladite lame puisse fléchir selon une direction (Δ) perpendiculaire à son axe longitudinal,

un organe de butée (5) assujetti sur la portion libre de la lame (4) et possédant une surface de contact (5a) destinée à venir en contact avec un objet à saisir,

des moyens de détection (7) de la proximité de l'objet à saisir, et des moyens de répartition (6) du débit de fluide alimentant chaque chambre (1a, 1b) du vérin (1), lesdits moyens de répartition étant asservis aux moyens de détection et étant adaptés pour :

commander une différence de pression relative entre les deux chambres (1a, 1b) du vérin permettant le déplacement de l'organe mobile (2) du vérin (1) en l'absence de contact entre l'organe de butée (5) et l'objet à saisir,

commander un rééquilibrage approximatif des pressions relatives des deux chambres du vérin lors du contact entre l'organe de butée (5) et l'objet à saisir,

au moins un potentiomètre (9) pneumatique composé d'une capacité de fluide dotée d'une entrée d'alimentation (9a) reliée à une source de fluide (S2), d'une buse pourvue d'une ouverture de fuite (9c) et d'une sortie (9b) de fluide reliée à une chambre (1a) du vérin (1), l'ouverture de fuite (9c) dudit potentiomètre étant agencée en regard de la portion libre de la lame (4) flexible, de façon à obtenir à la sortie (9b) de ce potentiomètre une grandeur pneumatique fonction directe de la flexion de la lame.

2. Dispositif selon la revendication 1, caractérisé en ce que chaque doigt mobile comprend deux potentiomètres (9, 11) dont les sorties (9b, 11b) respectives sont reliées chacune à une chambre différente (1a, 1b) du vérin (1), lesdits potentiomètres étant agencés de part et d'autre de la portion libre de la lame (4) flexible de façon que leurs débits de fuite varient en sens inverse lors de la flexion de ladite lame.

3. Dispositif selon la revendication 2, caractérisé en ce que le réseau (R2) de fluide alimentant les entrées (9a, 11a) des potentiomètres est adapté pour introduire des pertes de charges de valeurs différentes aptes à entraîner un faible décalage entre les pressions relatives des chambres (1a, 1b) du vérin lorsque la lame est au repos.

4. Dispositif selon la revendication 3, caractérisé en ce que :

les moyens de répartition sont constitués par un corps de vanne (6) pneumatique intégré à l'intérieur de l'organe de butée (5) et possédant au moins une entrée (6a) reliée à une source d'alimentation (S1) et au moins une sortie (6c) reliée à la chambre (1a) du vérin (1) (chambre dont l'expansion provoque un déplacement de l'organe mobile (2) en direction de l'objet à saisir),

les moyens de détection sont consitués par un obturateur (7) de vanne, mobile entre deux positions extrêmes :

une position déployée où il se trouve en saillie par rapport à la face de contact (5a) de l'organe de butée (5) et où il permet l'écoulement du fluide entre l'entrée (6a) et la sortie (6c) du corps de vanne (6),

une position rétractée où il est escamoté par rapport à ladite face de contact (5a) et où il empêche l'écoulement du fluide entre l'entrée (6a) et la sortie (6c) du corps de vanne (6).

5. Dispositif selon la revendication 4, caractérisé en ce que le corps de vanne (6) comprend une entrée d'alimentation (6a) reliée à une source de fluide (S1) une sortie (6c) d'utilisation reliée à la chambre (1a) du vérin (1) et une sortie (6b) d'évacuation débouchant à l'air libre, l'obturateur (7) étant adapté pour permettre d'une part, de canaliser le débit entre l'entrée (6a) d'alimentation et la sortie (6c) d'utilisation dans sa position déployée et d'autre part, entre la sortie d'utilisation (6c) et la sortie (6b) d'évacuation dans sa position rétractée.

6. Dispositif selon l'une des revendications précédentes, caractérisé en ce qu'il comprend au moins un appui (12) intermédiaire de la lame (4) flexible, agencé en regard de ladite lame flexible de façon à modifier la loi de flexion de celle-ci.

7. Dispositif de préhension multidigital selon l'une des revendications précédentes, destiné à être assujetti sur l'extrémité (14) du bras d'un manipulateur ou d'un robot industriel doté d'une unité centrale de commande, ledit dispositif comprenant au moins un doigt mobile et au moins un doigt fixe agencés de façon à permettre la préhension et le levage d'un objet, l'unité centrale du robot ou du manipulateur étant reliée au dispositif de préhension en vue de commander le déplacement de chaque doigt mobile.

## Claims

1. Multifinger-gripping device for gripping and manipulating objects and comprising at least one mobile finger (5) actuated by a pneumatic cylinder (1), the two internal chambers (1a, 1b) of which are connected, by means of networks (R1, R2 und R'2), to at least one supply source (S1, S2, S'2), said device being characterised in that each mobile finger comprises,

a flexible blade (4) firmly connected with the mobile element (2) of cylinder (1) in such a way that a free part of said blade can bend in a direction (Δ) at right angles to its longitudinal axis,

a stop element (5) fixed to the free part of blade (4) and having a contact surface (5a) intended to make contact with an object to be gripped,

means for sensing (7) the proximity of the object to be gripped, and means for distributing (6) the flow of fluid supplying each chamber (1a, 1b) of cylinder (1), said means of distribution being controlled by the sensing means and designed for

bringing about a relative pressure difference between the two chambers (1a, 1b) of the cylinder so as to enable displacement of the mobile element (2) of cylinder (1) in the absence of contact between stop element (5) and the object to be gripped,

bringing about approximate re-equalisation of the relative pressures in the two chambers of the cylinder during contact between stop element (5) and the object to be gripped,

at least one pneumatic potentiometer (9) comprising a fluid space with a supply inlet (9a) connected to a fluid source (S2) a nozzle provided with an escape opening (9c) and a fluid outlet (9b) connected to a chamber (1a) of cylinder (1), the escape opening (9c) of said potentiometer being

arranged with regard to the free part of flexible blade (4) in such a way as to obtain at outlet (9b) of said potentiometer a pneumatic magnitude directly dependent on the flexure of the blade.

2. Device according to claim 1, characterised in that each mobile finger comprises two potentiometers (9, 11), the respective outlets (9b, 11b) are each connected with a different chamber (1a, 1b) of cylinder (1), said potentiometers being arranged a either side of the free part of flexible blade (4) in such a way that their escape flows vary in inverse manner during flexure of said blade.

3. Device according to claim 2, characterised in that fluid network (R2) supplying the inlets (9a, 11a) of the potentiometers is designed to introduce pressure losses of different value capable of bringing about a slight displacement between the relative pressures in chambers (1a, 1b) of the cylinder when the blade is at rest.

4. Device according to claim 3, characterised in that :

the means of distribution consist in a pneumatic valve body (6) firmly installed within stop element (5) and having at least one inlet (6a) connected with a supply source (S1) and at least one outlet (6c) connected with chamber (1a) of cylinder (1) (the chamber, expansion of which causes displacement of the mobile element (2) in the direction of the object to be gripped),

the sensing means consist in a valve closure element (7), capable of moving between two extreme positions :

an extended position where it projects with regard to contact face (5a) of stop element (5) and enables the fluid to flow between inlet (6a) and oulet (6c) of valve body (6),

a retracted position in which it is withdrawn with regard to said contact face (5a) and where it prevents the fluid from flowing between inlet (6a) and outlet (6c) of valve body (6).

5. Device according to claim 4, characterised in that valve body (6) comprises a supply inlet (6a) connected with a fluid source (S1), a service source (6c) connected with chamber (1a) of cylinder (1) and evacuation outlet (6b) opening into the free atmosphere, closure element (7) being designed to enable, in the extended position, channelling of the flow between supply inlet (6a) and service outlet (6c), on the one hand, and, in the retracted position, between service outlet (6c) and evacuation outlet (6b), on the other hand.

6. Device according to one of the preceding claims, characterised in that it comprises at least one intermediate support (12) for the flexible blade (4), arranged with regard to said flexible blade in such a way as to modify the flexure lax of the latter.

7. Multifinger gripping device according to one of the preceding claims, for fastening to the end (14) of the arm of an industrial manipulator or robot, equipped with a central control unit, said device comprising at least one mobile finger and at least one fixed finger, wich are so designed as to enable gripping and lifting of an object, whereby the central unit of the robot or manipulator is connected with the gripping device with a view to controlling the displacement of each mobile finger.

## Patentansprüche

1. Mehrfingergreifvorrichtung zum Erfassen und Manipulieren von Gegenständen mit mindestens einem beweglichen Finger (5), der durch einen Druckluftzylinder (1) betätigt wird, dessen beide Innenkammern (1a, 1b) mit Hilfe von Netzwerken (R1, R2 und R'2) mit mindestens einer Versorgungsquelle (S1, S2, S'2) verbunden sind, wobei die besagte Vorrichtung dadurch gekennzeichnet ist, daß jeder bewegliche Finger folgende Teile umfaßt :

ein flexibles Blatt (4), das mit dem beweglichen Element (2) des Zylinders (1) so verbunden ist, daß sich ein freier Teil des besagten Blattes in zu seiner Längsachse senkrechter Richtung (Δ) abbiegen kann,

eine Anschlageinheit (5), die an dem freien Teil des Blattes (4) angebracht ist und eine Kontaktfläche (5a) zwecks Berührung eines zu erfassenden Gegenstands hat,

auf die Nähe des zu erfassenden Gegenstands ansprechende Abfühlmittel (7) und Mittel (6) zur Verteilung der Durchflußmenge der Flüssigkeit, die jeder Kammer (1a, 1b) des Zylinders (1) zuströmt, wobei die besagten Verteilungsmittel durch die Abfühlmittel gesteuert werden und so beschaffen sind, daß sie

einen relativen Druckunterschied zwischen den beiden Kammern (1a, 1b) des Zylinders bewirken, der Verlagerung des beweglichen Elements (2) des Zylinders (1) gestattet, wenn zwischen der Anschlageinheit (5) und dem zu erfassenden Gegenstand kein Kontakt besteht,

annähernden Wiederausgleich der relativen Drücke in den beiden Kammern des Zylinders bewirken, wenn die Anschlageinheit (5) und der zu erfassende Gegenstand in Kontakt sind,

mindestens ein pneumatisches Potentiometer (9), das sich aus einem Flüssigkeitsraum mit einem an eine Flüssigkeitsquelle (S2) angeschlossenen Versorgungseingang (9a), einer Düse mit einer Austrittsöffnung (9c) und einem an eine Kammer (1a) des Zylinders (1) angeschlossenen Flüssigkeitsausgang (9b) zusammensetzt, wobei die Austrittsöffnung (9c) des besagten Potentiometers so im Verhältnis zu dem freien Teil des flexiblen Blattes (4) angeordnet ist, daß an dem Ausgang (9b) des besagten Potentiometers ein unmittelbar von der Blattbiegung abhängiger pneumatischer Wert erzielt wird.

2. Vorrichtung nach Anspruch 1, dadurch gekennzeichnet, daß jeder bewegliche Finger zwei Potentiometer (9, 11) umfaßt, deren betreffende Ausgänge (9b, 11b) jeder mit einer anderen Kammer (1a, 1b) des Zylinders (1) verbunden sind, wobei die besagten Potentiometer zu der einen und der anderen Seite des freien Teiles des flexiblen Blattes (4) angeordnet sind, und zwar so, daß ihre Austrittsmengen bei Biegung des besagten Blattes im umgekehrten Sinne variieren.

3. Vorrichtung nach Anspruch 2, dadurch gekennzeichnet, daß das die Eingänge (9a, 11a) der Potentiometer speisende Flüssigkeitsnetzwerk (R2) so beschaffen ist, daß es Druckverluste unterschiedlicher Werte bewirkt, die in der Lage sind, · eine geringe Verschiebung zwischen den relativen Drücken der Zylinderkammern (1a, 1b) zu bewirken, wenn das Blatt im Ruhezustand ist.

4. Vorrichtung nach Anspruch 3, dadurch gekennzeichnet,

daß die Verteilungsmittel in einem innerhalb der Anschlageinheit (5) fest eingebauten Luftventilkörper (6) bestehen, der mindestens einen mit einer Versorgungsquelle (S1) verbundenen Eingang (6a) besitzt, sowie mindestens einen mit Kammer (1a) des Zylinders (1) (der Kammer, deren Expansion Verschiebung des beweglichen Elements (2) in Richtung des zu erfassenden Gegenstands bewirkt) verbundenen Ausgang (6c),

daß die Abfühlmittel in einem Verschlußkolben (7) bestehen, der zwischen zwei extremen Lagen beweglich ist, und zwar,

einer vorgeschobenen Lage, wo er im Verhältnis zu der Kontaktfläche (5a) der Anschlageinheit (5) vorsteht und Ablauf der Flüssigkeit zwischen Eingang (6a) und Ausgang (6c) des Ventilkörpers (6) gestattet,

einer zurückgezogenen Lage, in der er im Verhältnis zu der besagten Kontaktfläche (5a) zurückgezogen ist und Ablauf der Flüssigkeit zwischen Eingang (6a) und Ausgang (6c) des Ventilkörpers (6) verhindert.

5. Vorrichtung nach Anspruch 4, dadurch gekennzeichnet, daß der Ventilkörper (6) einen mit einer Flüssigkeitsquelle (S1) verbundenen Versorgungseingang (6a), einen mit Kammer (1a) des Zylinders (1) verbundenen Betriebsausgang (6c) und einen in die freie Atmosphäre führenden Abzugsausgang (6b) umfaßt, wobei der Verschlußkolben (7) so beschaffen ist, daß er einerseits, in seiner vorgeschobenen Lage, Leitung des Stromes zwischen dem Versorgungseingang (6a) und dem Betriebsausgang (6c) gestattet, und andererseits, in seiner zurückgezogenen Lage, zwischen dem Betriebsausgang (6c) und dem Abzugsausgang (6b).

6. Vorrichtung nach einem der vorstehenden Ansprüche, dadurch gekennzeichnet, daß sie mindestens eine Zwischenstütze (12) des flexiblen Blattes (4) umfaßt, die hinsichtlich des besagten flexiblen Blattes so angeordnet ist, daß sie deren Biegeverhalten abändert.

7. Mehrfingergreifvorrichtung nach einem der vorstehenden Ansprüche zur Anbringung am Ende (14) des Armes eines industriellen Manipulators oder Roboters mit einer zentralen Steuereinheit, wobei die besagte Vorrichtung mindestens einen beweglichen Finger und einen festen Finger umfaßt, die so beschaffen sind, daß sie das Erfassen und das Heben eines Gegenstandes gestatten, wobei die Zentraleinheit des Roboters bzw. Manipulators mit der Greifvorrichtung so verbunden ist, daß sie die Verlagerung jedes beweglichen Fingers steuert.

9

Fig . 1

Fig. 2

1

EP 0 223 779 B1

Fig. 3

Fig. 4a

6a     6b

8

6c

Fig.4b

6a     6b

6c

Fig. 5a

6a

8

7

15

6b     6c

Fig. 5b

6a

6b     6c

Fig. 6

1

14

3

5

9

11   4